**Europäisches Patentamt**

**European Patent Office**

**Office européen des brevets**

(19)

(11) **EP 1 235 448 A1**

(12) **EUROPÄISCHE PATENTANMELDUNG**

(43) Veröffentlichungstag:
**28.08.2002 Patentblatt 2002/35**

(51) Int Cl.⁷: **H04Q 7/38**

(21) Anmeldenummer: **01103434.5**

(22) Anmeldetag: **14.02.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **SIEMENS AKTIENGESELLSCHAFT
80333 München (DE)**

(72) Erfinder:
• **Ball, Carsten, Dr.
81373 München (DE)**
• **Deinzer, Arnulf, Dr.
81476 München (DE)**

(54) **Standortbestimmung eines mobilen Kommunikationsendgeräts in einem nichtzeitsynchronen Mobilfunksystem**

(57)    Die Erfindung betrifft ein Verfahren zur Standortbestimmung eines mobilen Kommunikationsendgeräts in einem nichtzeitsynchronen Mobilfunksystem. Von den einzelnen Basisstationen werden untereinander nichtzeitsynchronisierte Bursts und ihre jeweiligen Standorte periodisch rundgesendet, an den Basisstationen die Bursts empfangen und deren Laufzeiten miteinander verglichen, daraus ermittelte Laufzeitinformationen an das Kommunikationsendgerät übermittelt und dort der Standort des Kommunikationsendgeräts mit deren Hilfe und mit Hilfe der ebenfalls am Kommunikationsendgerät empfangenen Bursts und der empfangenen Standorte der Basisstationen bestimmt wird.

FIG 4

**Beschreibung**

Die Erfindung betrifft ein Verfahren zur Standortbestimmung eines mobilen Kommunikationsendgeräts in einem nichtzeitsynchronen Mobilfunksystem mit mehreren Basisstationen.

Bei Mobilfunksystemen sind eine Vielzahl von Verfahren zur Standortbestimmung von mobilen Kommunikationsendgeräten bekannt.

So ist beispielsweise die Standortbestimmung in einem nichtzeitsynchronen Mobilfunknetz mit Hilfe des sogenannten Timing Advance bekannt. Über eigens aufgebaute Verkehrskanäle werden Daten zwischen den Basisstationen und einem mobilen Kommunikationsendgerät ausgetauscht und mit deren Hilfe die jeweilige Entfernung zwischen den Basisstationen und dem Kommunikationsendgerät ermittelt und damit dessen Standort bestimmt.

Bei einem anderen Verfahren wird die Position des Kommunikationsendgeräts in einem zeitsynchronen Mobilfunknetz mit Hilfe von zeitsynchronen Signalen der Basisstationen und mittels Global-Positioning-System (GPS) bestimmt (US 5,815,538). Dabei werden Signale der Basisstationen mittels GPS zueinander zeitsynchronisiert ausgesendet und die jeweiligen Standorte der Basisstationen mittels GPS ermittelt. Am Kommunikationsendgerät werden die dort gemessenen Laufzeitdifferenzen zwischen den zeitsynchronen Signalen ausgewertet und in Entfernungen umgesetzt. Mit Hilfe der Daten der Standorte der Basisstationen kann dann die Position des Kommunikationsendgeräts berechnet werden.

Bei allen bekannten Verfahren, bei denen Daten zwischen Kommunikationsendgerät und Basisstation ausgetauscht werden, wird die Kapazität des Mobilfunknetzes durch belegte Verkehrskanäle zusätzlich belastet. Große Aufwendungen an Hardware, hardwarespezifischer Software und erhöhter Rechenkapazität sind die Folge.

Bei Verwendung des Timing Advance liegt die Genauigkeit der Standortbestimmung typischerweise im Bereich von ca. 500 m. Bei einer Verwendung der Positionsbestimmung als Teil einer Notruffunktion ist jedoch eine möglichst große Genauigkeit von entscheidender Bedeutung.

Bei der Verwendung von GPS zur Standortbestimmung sind an jedem Basisstationsstandort GPS-Empfänger vorzusehen, was zu erheblichen Zusatzkosten führt.

Ein im Kommunikationsendgerät integrierter GPS-Empfänger zur Standortbestimmung kommt aufgrund der damit verbundenen hohen Kosten, dem zusätzlichen Gewicht und des relativ hohen Stromverbrauchs des GPS-Empfängers nicht in Betracht.

Der Erfindung liegt deshalb die Aufgabe zugrunde, den Standort eines Kommunikationsendgeräts in einem nichtzeitsynchronen Mobilfunknetz mit einfachen Mitteln und ohne zusätzliche Belastung des Mobilfunknetzes mit ausreichender Genauigkeit zu bestimmen. Die Standortbestimmung soll dabei auch bei Empfangsstörungen am Kommunikationsendgerät möglich sein.

Die Aufgabe der Erfindung wird durch die Merkmale der Ansprüche 1 bzw. 2 gelöst. Vorteilhafte Weiterbildungen der Erfindung sind in den Unteransprüchen angegeben.

Durch das ausschließliche Rundsenden der Signale der Basisstationen und die Standortberechnung am Kommunikationsendgerät selbst wird die Kapazität des Mobilfunknetzes nicht unnötig belastet, Verkehrskanäle zum wechselseitigen Datenaustausch werden nicht benötigt.

Durch die Verwendung von ohnehin vorhandenen Bursts der einzelnen Basisstationen und durch die Berücksichtigung der nichtzeitsynchronen Lage dieser Bursts untereinander kann auf den Einsatz von weiteren Hilfsmitteln wie GPS vollständig verzichtet werden.

Für eine interne Zeitstabilität einer Basisstation werden typischerweise Genauigkeiten von 0.05 ppm gefordert. In einer vergleichbaren Genauigkeit sollte damit auch die Messung der jeweiligen Zeitdifferenzen erfolgen - sowohl an den Basisstationen als auch am Kommunikationsendgerät selbst. Vorteilhafterweise wird dazu jeweils ein hochgenauer Zähler verwendet, dessen Zählfrequenz aus der Frequenz des jeweiligen Sendeoszillators abgeleitet wird.

Bei einer bevorzugten Verwendung von Bursts mit einer typischen Länge von 471 µs und durch den hochgenauen Zähler können typischerweise Standortgenauigkeiten von 85 m erreicht werden. Bei der Verwendung von Signalen von mehr als 3 Basisstationen zur Standortbestimmung kann diese Genauigkeit weiter gesteigert werden.

In einer ersten bevorzugten Ausführungsform werden die einzelnen Standorte der Basisstationen, die zu einer ersten Basisstation benachbart sind, gemeinsam mit dem Standort der ersten Basisstation mit Hilfe ihres Broadcast-Control-Channel (BCCH) an das Kommunikationsendgerät übertragen. Dadurch entfällt das Mitverfolgen der Standortdaten der anderen Basisstationen durch das Kommunikationsendgerät.

In einer zweiten bevorzugten Ausführungsform werden die einzelnen Standorte der Basisstationen über den jeweiligen Broadcast-Control-Channel (BCCH) direkt einzeln am Kommunikationsendgerät empfangen, wodurch die knappe Kapazität des Broadcast-Control-Channel (BCCH) geringer belastet wird.

Gemäß der Erfindung könnten zur Übertragung der Standorte anstelle des Broadcast-Control-Channel (BCCH) auch geeignete andere Kanäle verwendet werden.

Um die Signallaufzeitdifferenzen zwischen den Bursts bestimmen zu können, ist vorteilhafterweise bei jeder Basisstation eine Zusatzeinrichtung angeordnet. Mit Hilfe dieser Zusatzeinrichtung kann außerdem zusätzlich die Netzqualität mit Hilfe der mit konstanter, maximaler Leistung sendenden Kanäle überwacht werden.

Die an der ersten Basisstation ermittelten Signallaufzeitdifferenzen zwischen den Bursts und damit auch die ermittelten jeweiligen Aussendezeitpunkte dieser Bursts werden sich kaum ändern. Die Aussendezeitpunkte können somit relativ selten gesendet werden. Alternativ zum Senden der jeweiligen Aussendezeitpunkte der Bursts kann auch das Senden der bei der Basisstation ermittelten Signallaufzeitdifferenzen und die anschließende Ermittlung der Aussendezeitpunkte der Bursts am Kommunikationsendgerät durchgeführt werden.

Treten umweltbedingte Störungen oder Abschattungen auf, so kann gemäß der Erfindung der Standort des Kommunikationsendgeräts trotzdem über die vorher ermittelten Empfangsdaten mit Hilfe von statistischen Verfahren berechnet werden. Die Empfangsdaten sind erfindungsgemäß im Kommunikationsendgerät in einer Liste abgelegt. Diese Berechnungsmöglichkeit ist besonders bei schwieriger Topografie von großem Vorteil.

Anwendungsbeispiele der Erfindung finden sich bei Standortbestimmungen eines Kommunikationsendgerätes in einem nichtzeitsynchronisierten Mobilfunknetz.

Im folgenden wird ein Ausführungsbeispiel der Erfindung anhand einer Zeichnung näher erläutert. Dabei zeigen, gemäß der Erfindung:

FIG 1 ein Mobilfunksystem mit mehreren Basisstationen und einem Kommunikationsendgerät,
FIG 2 die an einer ersten Basisstation ermittelten Signallaufzeitdifferenzen zwischen den Bursts der Basisstationen aus FIG 1,
FIG 3 die Ermittlung der Laufzeitunterschiede am Kommunikationsendgerät, die zur Standortbestimmung verwendet werden,
FIG 4 eine Darstellung zur Standortbestimmung eines Kommunikationsendgeräts.

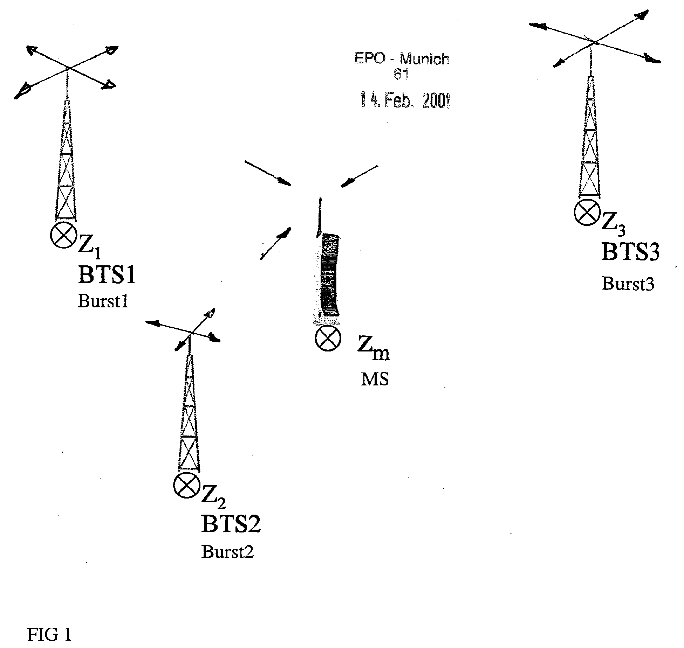

FIG 1 zeigt drei Basisstationen BTS1, BTS2, BTS3 innerhalb eines Mobilfunksystems, die jeweils ihre bekannten Standorte Z1, Z2, Z3, sowie jeweils ihren Burst1, Burst2 und Burst3, die untereinander nicht zeitsynchronisiert sind, als Signale periodisch rundsenden. Ebenfalls werden beispielsweise an einer ersten Basisstation BTS1 die dort ermittelten Aussendezeitpunkte von Burst2 und Burst3, bezogen jeweils auf ihren eigenen Burst1, von dieser ersten Basisstation BTS1 periodisch rundgesendet.

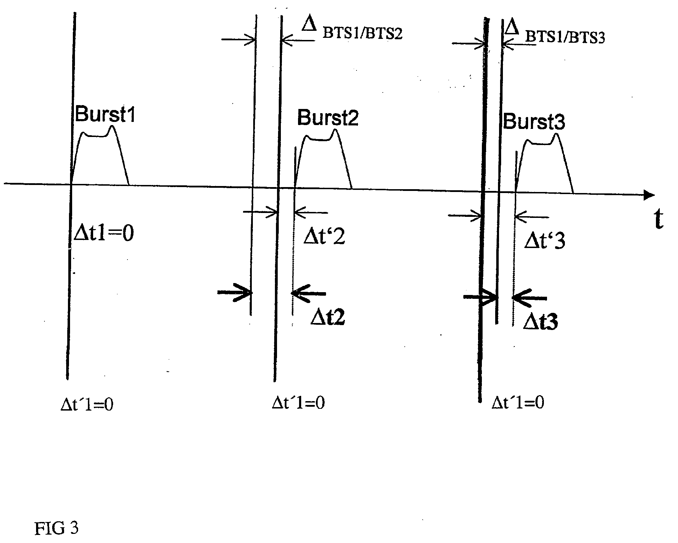

Die ermitteltenden Aussendezeitpunkte der Bursts werden in FIG 3 beschrieben und sind hier nicht gezeigt.
Die beschriebenen Signale werden am Kommunikationsendgerät MS empfangen und mit deren Hilfe dort der Standort Zm des Kommunikationsendgeräts MS eigenständig und ohne Kommunikation mit dem Netzwerk berechnet.

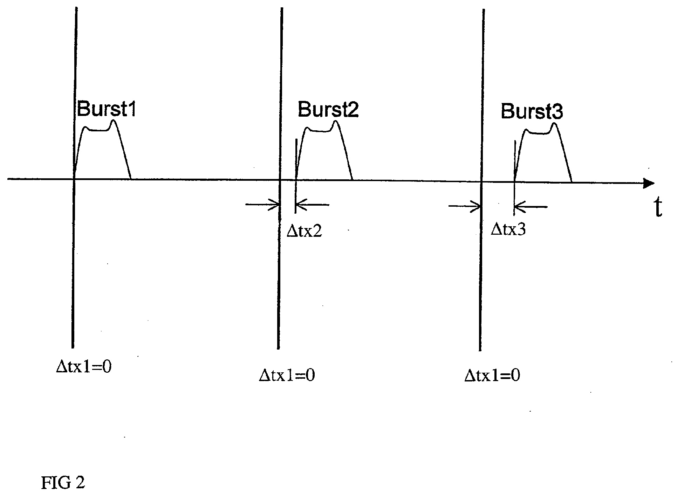

FIG 2 zeigt die an einer ersten Basisstation BTS1 ermittelten Signallaufzeitdifferenzen $\Delta tx2$ und $\Delta tx3$, wobei an der ersten Basisstation jeweils der Burst2 und der Burst3 von zwei benachbarten Basisstationen BTS2 und BTS3 empfangen und mit dem eigenen Burst1 verglichen wird.
Die steigende Flanke des Bursts1 wird beispielsweise als Referenz verwendet und mit den steigenden Flanken von Burst2 bzw. Burst3 verglichen. Es ergeben sich die auf den Burst1 bezogenen Signallaufzeitdifferenzen $\Delta tx2$ und $\Delta tx3$ an der ersten Basisstation BTS1 mit $\Delta tx1=0$ als Referenz.
Die Signallaufzeitdifferenzen $\Delta tx2$ und $\Delta tx3$ setzen sich dabei jeweils aus den Zeitversätzen der nichtzeitsynchronisierten Bursts untereinander sowie aus der jeweils durch die Entfernung der Basisstation BTS1 zur Basisstation BTS2 bzw. der Basisstation BTS1 zur Basisstation BTS3 bedingten Laufzeiten der Bursts Burst2 bzw. Burst3 zusammen.
Mit Hilfe der an der ersten Basisstation bekannten Standorte Z1, Z2, Z3 der Basisstationen BTS1, BTS2, BTS3 kann die jeweilige Entfernung zwischen den Basisstationen BTS1 und BTS2 bzw. zwischen BTS1 und BTS3 berechnet und der jeweilige Aussendezeitpunkt $\Delta_{BTS1/BTS2}$ des Burst2 bzw. $\Delta_{BTS1/BTS3}$ des Burst3 als jeweiliger relativer Zeitnullpunkt ermittelt werden. Die Aussendezeitpunkte $\Delta_{BTS1/BTS2}$ bzw. $\Delta_{BTS1/BTS3}$ sind in der nachfolgenden FIG 3 gezeigt.

Mit Hilfe des Broadcast-Control-Channel BCCH der ersten Basisstation BTS1 werden diese rundgesendet und gelangen so zum Kommunikationsendgerät MS. Anstelle des BCCH könnte auch ein anderer, dafür geeigneter Kanal verwendet werden.

Die hier für die erste Basisstation BTS1 geschilderte Zeitbetrachtung und das folgende Rundsenden trifft in gleicher Weise auf alle anderen Basisstationen mit den jeweils dort empfangenen Signalen zu.

FIG 3 zeigt die am Kommunikationsendgerät ermittelten Burstlaufzeitdifferenzen $\Delta t'2$ und $\Delta t'3$, wobei jeweils der dort empfangene Burst1 der Basisstation BTS1 mit dem empfangenen Burst2 bzw. Burst3 der benachbarten Basisstationen BTS2 und BTS3 verglichen wird und auch hier beispielsweise die steigende Flanke des Burst1 als Referenz dient.

Wie in FIG 2 beschrieben, gelangen auch die bei der ersten Basisstation ermittelten Aussendezeitpunkte $\Delta_{BTS1/BTS2}$ und $\Delta_{BTS1/BTS3}$ als relative Zeitnullpunkte an das Kommunikationsendgerät MS. Mit Hilfe der am Kommunikationsendgerät MS ermittelten Burstlaufzeitdifferenzen $\Delta t'2$ und $\Delta t'3$ können nun bezogene Laufzeitunterschiede $\Delta t2$ und $\Delta t3$ bestimmt werden, die zur Bestimmung des Standorts Zm des Kommunikationsendgeräts verwendet werden.

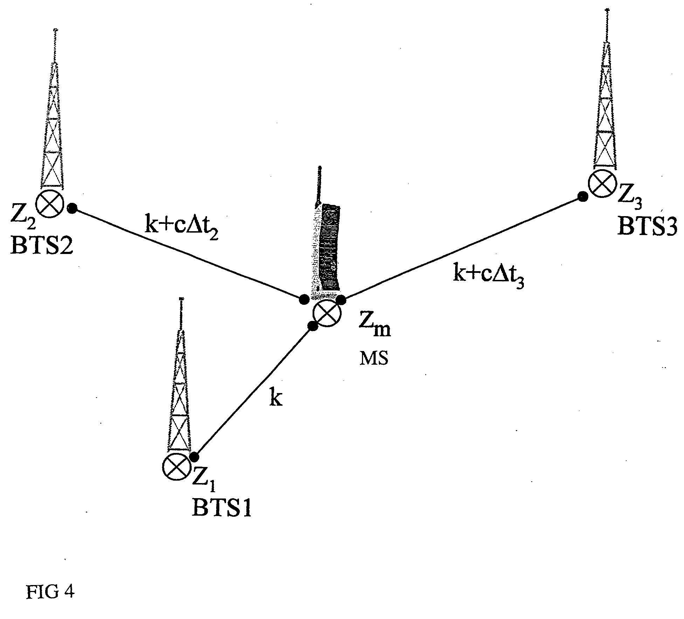

FIG 4 zeigt den Standort Zm des Kommunikationsendgeräts MS und drei Standorte Z1, Z2, Z3 der Basisstationen BTS1, BTS2, BTS3. Mit Hilfe der Entfernungen k, $k+c\cdot\Delta t_2$ und $k+c\cdot\Delta t_3$ des Kommunikationsend-

geräts MS zu den drei Basisstationen BTS1, BTS2 und BTS3 und deren Standorte Z1,Z2,Z3 kann der Standort $z_m$ des Kommunikationsendgeräts MS mit Hilfe eines implementierten Algorithmus am Kommunikationsendgerät MS bestimmt werden.

Aus dem Gleichungssystem:

$$|z_m - z_1| = k$$

$$|z_m - z_2| = k + \Delta t_2 \cdot c$$

$$|z_m - z_3| = k + \Delta t_3 \cdot c$$

mit

$z_1$ als bekannter Standort der ersten Basisstation BTS1,

$z_2$ als bekannter Standort der zweiten Basisstation BTS2,

$z_3$ als bekannter Standort der dritten Basisstation BTS3,

k als noch zu bestimmende Entfernung des Kommunikationsendgeräts MS von der ersten Basisstation BTS1,

$\Delta t_2$ und $\Delta t_3$ als ermittelte Laufzeitunterschiede und mit der Lichtgeschwindigkeit c kann der Standort $z_m$ ermittelt werden.

Die Standorte der Z1,Z2,Z3 können beispielsweise in den Koordinaten des UTM-Koordinatensystems, des karthesischen Koordinatensystems oder eines anderen, beliebigen Koordinatensystems übermittelt werden.

Bei einer Übermittlung in kartesischen (x, y)-Koordinaten errechnet sich der Standort $z_m$ des Kommunikationsendgeräts MS mit :

$z_m = x_m + j \cdot y_m$ als Standort des Kommunikationsendgeräts MS,

$z_1 = x_1 + j \cdot y_1$ als Standort einer ersten Basisstation BTS1,

$z_2 = x_2 + j \cdot y_2$ als Standort einer zweiten Basisstation BTS2,

$z_3 = x_3 + j \cdot y_3$ als Standort einer dritten Basisstation BTS3,

wobei weitere empfangene Standorte $z_i$ von anderen Basisstationen mit den Koordinaten (x,y,z) die Genauigkeit der Standortberechnung des Kommunikationsendgeräts MS noch erhöhen bzw. die einzelnen z-Koordinaten dieser Standorte $z_i$ als Ausdruck für die Höhe des Standorts $z_m$ des Kommunikationsendgeräts MS noch mit einbezogen werden kann.

Die Daten der einzelnen Standorte Z1,Z2,Z3 werden beispielsweise über ein Operating & Maintenance Center (OMC) oder über eine zugeordnete Verwaltungseinrichtung den jeweiligen Basisstationen mitgeteilt oder diese werden während der Errichtung über ein Local Maintenance Terminal (LMT) an den Basisstationen einprogrammiert und stehen somit dort zur Verfügung.

Im Ausführungsbeispiel werden mit Hilfe von Burst1, Burst2 und Burst3 die zur Standortbestimmung benötigten Laufzeitunterschiede ermittelt, jedoch ist auch die Auswertung von anderen, von den jeweiligen Basisstationen periodisch rundgesendeten Signalen möglich, sofern sie zu einer Standortbestimmung mit ausreichenden Genauigkeit geeignet sind.

Ebenso ist die Verwendung von entsprechend geeigneten anderen Kanälen zum Rundsenden der beschriebenen Signale der Basisstationen anstelle des Broadcast-Control-Channels (BCCH) möglich.

## Patentansprüche

1. Verfahren zur Standortbestimmung eines mobilen Kommunikationsendgeräts (MS) in einem nichtzeitsynchronen Mobilfunksystem mit mehreren Basisstationen (BTS1,BTS2,BTS3,...),
bei dem jede Basisstation (BTS1,BTS2,BTS3,...) als Signale ihren Burst (Burst1,Burst2,Burst3,...), ihre Daten des Standorts (Z1,Z2,Z3,...) und ermittelte Aussendezeitpunkte ($\Delta_{BTS1/BTS2}$, $\Delta_{BTS1/BTS3,...}$) der Bursts periodisch rundsendet,
bei dem das Kommunikationsendgerät (MS) die Signale von benachbarten Basisstationen (BTS1,BTS2,BTS3,...) empfängt und es mit deren Hilfe seinen Standort ($z_m$) eigenständig und ohne Kommunikation mit dem Netzwerk berechnet.

2. Verfahren zur Standortbestimmung eines mobilen Kommunikationsendgeräts (MS) in einem nichtzeitsynchronen Mobilfunksystem mit mehreren Basisstationen (BTS1,BTS2,BTS3,...),
bei dem jede Basisstation (BTS1,BTS2,BTS3,...) als Signale ihren Burst (Burst1,Burst2,Burst3,...), ihre Daten des Standorts (Z1,Z2,Z3,...) und ermittelte Signallaufzeitdifferenzen zwischen den Bursts benachbarter Basisstationen periodisch rundsendet,
bei dem das Kommunikationsendgerät (MS) die Signale von benachbarten Basisstationen (BTS1,BTS2,BTS3,...) empfängt und es mit deren Hilfe seinen Standort ($z_m$) eigenständig und ohne Kommunikation mit dem Netzwerk berechnet.

3. Verfahren nach Anspruch 1, bei dem mit Hilfe einer Zusatzeinrichtung an einer ersten Basisstation (BTS1) die auf ihren Burst (Burst1) bezogenen Signallaufzeitdifferenzen ($\Delta tx1=0,\Delta tx2,\Delta tx3,...$) zwischen dem Burst (Burst1) der ersten Basisstation (BTS1) und den Bursts (Burst2,Burst3,...) benachbarter Basisstationen (BTS2,BTS3,...) ermittelt und daraus die jeweiligen Aussendezeitpunkte der Bursts ($\Delta_{BTS1/BTS2}$,$\Delta_{BTS1/BTS3,...}$) mit Hilfe der aus den Standortdaten bekannten Abständen der ersten Basisstation (BTS1) zu den benachbarten Basisstationen (BTS2,BTS3,...) berechnet werden und die Aussendezeitpunkte ($\Delta_{BTS1/BTS2}$, $\Delta_{BTS1/BTS3,...}$) jeweils als relative Zeitnullpunkte zum Kommunikationsendgerät (MS) übertragen werden.

4. Verfahren nach Anspruch 2, bei dem mit Hilfe einer Zusatzeinrichtung an einer ersten Basisstation (BTS1) die auf ihren Burst (Burst1) bezogenen Signallaufzeitdifferenzen ($\Delta tx1=0$,$\Delta tx2$,$\Delta tx3$,...) zwischen dem Burst (Burst1) der ersten Basisstation (BTS1) und den Bursts (Burst2,Burst3,...) benachbarter Basisstationen (BTS2,BTS3,...) ermittelt und zum Kommunikationsendgerät (MS) übertragen werden und dort der jeweilige Aussendezeitpunkt der Bursts ($\Delta_{BTS1/BTS2}$,$\Delta_{BTS1/BTS3,...}$) als relativer Zeitnullpunkt mit Hilfe der dem Kommunikationsendgerät (MS) aus den Standortdaten bekannten Abständen der ersten Basisstation (BTS1) zu den benachbarten Basisstationen (BTS2,BTS3,...) berechnet wird.

5. Verfahren nach Anspruch 3 oder 4, bei dem am Kommunikationsendgerät (MS) die auf den Burst (Burst1) der ersten Basisstation (BTS1) bezogenen Burstlaufzeitdifferenzen ($\Delta t'1=0$,$\Delta t'2$,$\Delta t'3$,...) zwischen dem Burst (Burst1) der ersten Basisstation und den Bursts (Burst2,Burst3,...) benachbarter Basisstationen (BTS2,BTS3,...) ermittelt und mit Hilfe des jeweiligen relativen Zeitnullpunkts ($\Delta_{BTS1/BTS2}$,$\Delta_{BTS1/BTS3,...}$) auf den Burst (Burst1) der ersten Basisstation (BTS1) bezogene Laufzeitunterschiede ($\Delta t2$, $\Delta t3$,...) berechnet werden, die zur Bestimmung des Standorts ($z_m$) des Kommunikationsendgeräts (MS) verwendet werden.

6. Verfahren nach einem der vorhergehenden Ansprüche, bei dem die Daten des jeweiligen Standorts (Z1,Z2,Z3,...) jeder einzelnen Basisstation über deren jeweiligen Broadcast-Control-Channel (BCCH) oder über einen jeweils eigenen Kanal an das Kommunikationsendgerät (MS) gelangen.

7. Verfahren nach einem der Ansprüche 1 bis 5, bei dem die Daten der Standorte (Z2,Z3,...) von benachbarten Basisstationen (BTS2,BTS3,...) einer ersten Basisstation (BTS1) gemeinsam mit den Daten ihres eigenen Standorts (Z1) über den Broadcast-Control-Channel (BCCH) der ersten Basisstation oder über einen eigenen Kanal der ersten Basisstation (BTS1) an das Kommunikationsendgerät (MS) gelangen.

8. Verfahren nach einem der vorhergehenden Ansprüche, bei dem die erste Basisstation (BTS1) die bei ihr ermittelten Aussendezeitpunkte der Bursts ($\Delta_{BTS1/BTS2}$,$\Delta_{BTS1/BTS3,...}$) oder die bei ihr ermittelten Signallaufzeitdifferenzen ($\Delta tx1=0$,$\Delta tx2$,$\Delta tx3$,...) über ihren Broadcast-Control-Channel (BCCH) oder über einen eigenen Kanal rundsendet und diese an das Kommunikationsendgerät (MS) gelangen.

9. Verfahren nach einem der vorhergehenden Ansprüche, bei dem mit Hilfe eines implementierten Algorithmus am Kommunikationsendgerät (MS) dessen Standort ($z_m$) anhand der jeweiligen ermittelten Laufzeitunterschiede ($\Delta t2$,$\Delta t3$,...) der Bursts (Burst1,Burst2,Burst3,...) und der übertragenen Daten der Standorte (Z1,Z2,Z3,...) von benachbarten Basisstationen (BTS1,BTS2,BTS3,...)berechnet wird.

10. Verfahren nach einem der vorhergehenden Ansprüche, bei dem sich der zu ermittelnde Standort $z_m$ des Kommunikationsendgeräts (MS) mit Hilfe der Signale von wenigstens drei Basisstationen (BTS1,BTS2,BTS3) anhand des Gleichungssystems

$$|z_m - z_1| = k$$

$$|z_m - z_2| = k + \Delta t_2 \cdot c$$

$$|z_m - z_3| = k + \Delta t_3 \cdot c$$

errechnet mit

$z_1$ als Standort einer ersten Basisstation (BTS1),
$z_2$ als Standort einer zweiten Basisstation (BTS2),
$z_3$ als Standort einer dritten Basisstation (BTS3),
k als noch zu bestimmende Entfernung des Kommunikationsendgeräts (MS) von der ersten Basisstation (BTS1),
$\Delta t_2$ als ermittelter Laufzeitunterschied zwischen den Bursts der zweiten und der ersten Basisstation,
$\Delta t_3$ als ermittelter Laufzeitunterschied zwischen den Bursts der dritten und der ersten Basisstation und mit c, der Lichtgeschwindigkeit.

11. Verfahren nach einem der vorhergehenden Ansprüche, bei dem die Standorte der Basisstationen (Z1,Z2,Z3,...) in den Koordinaten des UTM-Koordinatensystems oder des karthesischen Koordinatensystems oder eines anderen, beliebigen Koordinatensystems übermittelt werden.

**12.** Verfahren nach Anspruch 10, bei dem Standorte $z_i$ der Basisstationen in kartesischen Koordinaten übermittelt und der Standort $z_m$ eines Kommunikationsendgeräts (MS) in kartesischen $(x, y)$-Koordinaten errechnet wird mit: $z_m = x_m + j \cdot y_m$ als Standort des Kommunikationsendgeräts (MS), $z_1 = x_1 + j \cdot y_1$ als Standort einer ersten Basisstation (BTS1), $z_2 = x_2 + j \cdot y_2$ als Standort einer zweiten Basisstation (BTS2), $z_3 = x_3 + j \cdot y_3$ als Standort einer dritten Basisstation (BTS3),
wobei optional durch weitere empfangene Standorte $z_i$ mit den Koordinaten $(x,y,z)$ die Genauigkeit der Standortberechnung des Kommunikationsendgeräts (MS) erhöht wird und/oder die einzelnen z-Koordinaten der Standorte $z_i$ der Basisstationen als Ausdruck für die Höhe des Standorts des Kommunikationsendgeräts (MS) einbezogen werden kann.

**13.** Verfahren nach den vorhergehenden Ansprüchen, bei dem die jeweilige Burstlaufzeitdifferenz ($\Delta t'1=0,\Delta t'2,\Delta t'3,...$) bzw. Signallaufzeitdifferenz ($\Delta tx1=0,\Delta tx2,\Delta tx3,...$) beim Kommunikationsendgerät und/oder bei der jeweiligen Basisstation mit Hilfe eines hochgenauen Zählers mit einer aus der Frequenz des Sendeoszillators abgeleiteten Zählfrequenz ermittelt wird.

**14.** Verfahren nach den vorhergehenden Ansprüchen, bei dem das Kommunikationsendgerät bei Empfangsbeeinträchtigungen seinen Standort ($z_m$) aus älteren und aktuellen Empfangsdaten oder nur aus älteren Empfangsdaten unter Anwendung statistischer Verfahren hochrechnet, wobei diese Empfangsdaten im Kommunikationsendgerät (MS) in einer Liste abgelegt sind.

**15.** Verfahren nach den vorhergehenden Ansprüchen, bei dem jede Basisstation (BTS1,BTS2,BTS3,...) die Daten der jeweiligen Standorte (Z1,Z2,Z3,...) über ein Operating & Maintenance Center (OMC) oder über eine zugeordnete Verwaltungseinrichtung mitgeteilt bekommt oder diese während der Errichtung über ein Local-Maintenance-Terminal (LMT) an jeder Basisstation einprogrammiert werden und somit dort zur Verfügung stehen.

$Z_1$
BTS1
Burst1

$Z_2$
BTS2
Burst2

$Z_m$
MS

$Z_3$
BTS3
Burst3

EPO - Munich
61
14. Feb. 2001

FIG 1

Burst1      Burst2      Burst3

$\Delta$tx2      $\Delta$tx3

t

$\Delta$tx1=0      $\Delta$tx1=0      $\Delta$tx1=0

FIG 2

FIG 3

FIG 4

**EP 1 235 448 A1**

**Europäisches Patentamt**

## EUROPÄISCHER RECHERCHENBERICHT

Nummer der Anmeldung

EP 01 10 3434

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 197 21 504 C (SIEMENS AG) 12. November 1998 (1998-11-12) | 1 | H04Q7/38 |
| Y | * Zusammenfassung * * Seite 2, Zeile 24 - Zeile 32 * * Seite 3, Zeile 1 - Seite 4, Zeile 40 * * Abbildung 1 * | 2-15 | |
| X | WO 97 38548 A (LINKOLA JANNE ;FINLAND TELECOM OY (FI); KESKI HEIKKILAE MIKA (FI)) 16. Oktober 1997 (1997-10-16) | 1 | |
| Y | * Zusammenfassung * * Seite 2, Zeile 11 - Zeile 33 * * Seite 4, Zeile 9 - Zeile 14 * * Seite 5, Zeile 5 - Seite 6, Zeile 30 * * Abbildungen 1,2 * | 2-15 | |
| X | WO 97 30360 A (ERICSSON TELEFON AB L M) 21. August 1997 (1997-08-21) | 2 | |
| Y | * Zusammenfassung * | 1,6-15 | RECHERCHIERTE SACHGEBIETE (Int.Cl.7) |
| A | * Seite 2, Zeile 27 - Zeile 30 * * Seite 4, Zeile 9 - Zeile 14 * * Seite 15, Zeile 6 - Seite 16, Zeile 3 * * Abbildung 1 * | 3-5 | H04Q |
| Y | DE 38 27 352 A (BOSCH GMBH ROBERT) 15. Februar 1990 (1990-02-15) | 1-5 | |
| A | * Zusammenfassung * * Spalte 1, Zeile 59 - Spalte 2, Zeile 34 * * Abbildung 3 * | 6-15 | |
| A | US 5 613 205 A (DUFOUR DANIEL) 18. März 1997 (1997-03-18) * Zusammenfassung * * Spalte 5, Zeile 59 - Spalte 7, Zeile 63 * * Abbildung 2 * | 1-15 | |

-/--

Der vorliegende Recherchenbericht wurde für alle Patentansprüche erstellt

| Recherchenort | Abschlußdatum der Recherche | Prüfer |
|---|---|---|
| MÜNCHEN | 3. Mai 2001 | Rabe, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

# EUROPÄISCHER RECHERCHENBERICHT

Nummer der Anmeldung

EP 01 10 3434

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 96 35306 A (GANNON STEPHEN MARK ;MUNDAY PETER ROBERT (GB); GOETZ IAN (GB); TEL) 7. November 1996 (1996-11-07) <br> * Zusammenfassung * <br> * Seite 2, Zeile 30 - Seite 3, Zeile 7 * <br> * Seite 8, Zeile 24 - Seite 10, Zeile 3 * <br> * Seite 13, Zeile 30 - Seite 16, Zeile 13 * <br> * Seite 17, Zeile 23 - Zeile 24 * <br> * Abbildung 2 * | 1-15 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| MÜNCHEN | 3. Mai 2001 | Rabe, M |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                EP 01 10 3434

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2001

| Im Recherchenbericht angeführtes Patentdokument | Datum der Veröffentlichung | Mitglied(er) der Patentfamilie | Datum der Veröffentlichung |
|---|---|---|---|
| DE 19721504  C | 12-11-1998 | KEINE | |
| WO 9738548  A | 16-10-1997 | FI 964869 A<br>AU 2295097 A<br>EP 0885543 A<br>TR 9801986 T | 05-10-1997<br>29-10-1997<br>23-12-1998<br>21-12-1998 |
| WO 9730360  A | 21-08-1997 | SE 513196 C<br>AU 1817497 A<br>CA 2245878 A<br>CN 1211377 A<br>EP 0883968 A<br>JP 2000504838 T<br>SE 9600577 A<br>US 5960355 A | 31-07-2000<br>02-09-1997<br>21-08-1997<br>17-03-1999<br>16-12-1998<br>18-04-2000<br>17-08-1997<br>28-09-1999 |
| DE 3827352  A | 15-02-1990 | KEINE | |
| US 5613205  A | 18-03-1997 | AU 716551 B<br>AU 5291396 A<br>BR 9607916 A<br>CA 2216939 A<br>CN 1185267 A<br>EP 0872143 A<br>JP 11502685 T<br>NO 974489 A<br>PL 322551 A<br>WO 9631076 A<br>TR 9701077 T | 02-03-2000<br>16-10-1996<br>09-06-1998<br>03-10-1996<br>17-06-1998<br>21-10-1998<br>02-03-1999<br>27-11-1997<br>02-02-1998<br>03-10-1996<br>21-03-1998 |
| WO 9635306  A | 07-11-1996 | AU 701275 B<br>AU 5507296 A<br>CA 2219783 A<br>EP 0824840 A<br>JP 11505078 T<br>NO 975041 A<br>NZ 306501 A<br>US 6201803 B | 21-01-1999<br>21-11-1996<br>07-11-1996<br>25-02-1998<br>11-05-1999<br>30-12-1997<br>29-04-1999<br>13-03-2001 |

EPO FORM P0461

Für nähere Einzelheiten zu diesem Anhang : siehe Amtsblatt des Europäischen Patentamts, Nr. 12/82